# EUROPÄISCHE PATENTSCHRIFT

(11) **EP 1 840 003 B1**
(45) Veröffentlichungstag und Bekanntmachung des Hinweises auf die Patenterteilung: **16.03.2011**
(21) Anmeldenummer: 07005520.7
(22) Anmeldetag: 17.03.2007
(51) Int. Cl.: B62D 21/15, B62D 21/09, B62D 25/20, B62D 29/00

(54) **Schwellerverstärkungselement für eine Fahrzeugkarosserie**
Door sill reinforcing element for a car body
Elément de renforcement d'un soubassement de porte de carrosserie de véhicule automobile

(30) Priorität: 31.03.2006 DE 102006014962
(43) Veröffentlichungstag der Anmeldung: 03.10.2007
(73) Patentinhaber: Dr. Ing. h.c. F. Porsche AG, 70435 Stuttgart (DE)
(72) Erfinder: Schiebel, Dieter, 70825 Korntal-Münchingen (DE); Baumann, Peter, 75249 Kieselbronn (DE); Bayer, Jürgen, 71287 Weissach (DE); Neumann, Wolfgang, 71735 Eberdingen (DE)

(56) Entgegenhaltungen:
- WO-A-2005/108193
- DE-A1- 10 248 846
- US-B1- 6 193 306

## Beschreibung

Die vorliegende Erfindung bezieht sich auf ein Schwellerverstärkungselement für eine Fahrzeugkarosserie gemäß Oberbegriff des Patentanspruchs 1.

Aus der gattungsgemäßen US 6,193,306 B1 geht ein Schwellerverstärkungselement hervor, wie es im Oberbegriff des Patentanspruchs 1 beschrieben ist. Das Schwellerverstärkungselement für eine Fahrzeugkarosserie besitzt einen sich entlang einer Längsachse erstreckenden Hohlprofilabschnitt, an dem ein unterer Flanschabschnitt angeformt ist, der sich ebenfalls entlang der Längsachse erstreckt. Der untere Flanschabschnitt dient der Anbindung eines Karosserieseitenteilabschnitts und eines unteren Längsträgerabschnitts. Das Schwellerverstärkungselement besitzt ferner einen an den Hohlprofilabschnitt angeformten oberen Flanschabschnitt, der sich ebenfalls entlang der Längsachse erstreckt und der Anbindung eines Türeinstiegsabschnitts und eines oberen Längsträgerabschnitts dient. Das bekannte Schwellerverstärkungselement ist dreiteilig ausgeführt und weist als Hohlprofilabschnitt ein Rohrprofil mit kreisförmigem Querschnitt auf, an dem die Flanschabschnitte, die als separate Bauteile ausgebildet sind, befestigt sind.

Obwohl auf beliebige Fahrzeugkarosserien und Karosseriebereiche anwendbar, werden die vorliegende Erfindung sowie die ihr zugrunde liegende Problematik in Bezug auf einen unteren Türeinstiegsbereich eines Personenkraftfahrzeuges näher erläutert.

Schwellerverstärkungselemente sind im modernen Fahrzeugbau hinlänglich bekannt und umfassen im Wesentlichen längsseitige Profilstreben oder Blechformteile, welche im Bereich von Türschwellen des Fahrzeuges angeordnet sind. Solche Schwellerverstärkungselemente erhöhen einerseits die Steifigkeit und Festigkeit der Fahrzeugkarosserie und nehmen andererseits bei einer seitlichen Fahrzeugkollision durch Deformation Aufprallenergien auf.

Eine allgemeine Zielsetzung bei der Konstruktion von Schweflerverstärkungselementen ist es, eine möglichst hohe Torsions- und Biegesteifigkeit sowie ein möglichst großes Absorptionsvermögen von Aufprallenergie der Fahrzeugkarosserie bei einem möglichst geringen Gewicht der Schwellerverstärkungselemente zu erhalten. Eine hohe Torsions- und Biegesteifigkeit der Fahrzeugkarosserie verbessert die Fahrzeugfahreigenschaften, insbesondere bei Kurvenfahrten. Ferner schützt eine Fahrzeugkarosserie mit einem hohen Absorptionsvermögen von Aufprallenergie Insassen des Fahrzeugs bei Kollisionen. Des Weiteren können durch Gewichtsersparnisse bei den Schwellerverstärkungen beispielsweise Einsparungen beim Kraftstoffverbrauch oder höhere Beschleunigungen des Fahrzeugs erzielt werden.

Eine weitere allgemeine Zielsetzung ist es, Schwellerverstärkungselemente so zu gestalten, dass sie einfach und zeitsparend herstellbar und montagetechnisch effizient an der Karosserie anbringbar sind. Dadurch lassen sich Kostenvorteile bei der Herstellung und Montage der Schwellerverstärkungselemente erzielen.

Es wurden bereits verschiedene Ansätze zur Verbesserung von Schwellerverstärkungselementen vorgeschlagen. Die meisten weisen dabei eine mehrteilige Ausführungsform des Schwellerverstärkungselementes auf, wie beispielsweise in der DE 100 28 716 B4 beschrieben.

Eine solche mehrteilige Ausführung ist insofern nachteilig, als dass diese ein Anbringen von Verbindungselementen, wie beispielsweise Schweißnähten erfordert. Solche Verbindungselemente reduzieren im Allgemeinen die Festigkeit des Schwellerverstärkungselements und erhöhen dessen Gewicht.

Ein weiterer Lösungsvorschlag zur Verbesserung von Schwellerverstärkungselementen ist in der DE 102 48 846 A1 beschrieben. Diese beschreibt ein Schwellerverstärkungselement, welches ein langes, einteiliges Strangpressprofilteil aus Aluminium aufweist.

Nachteilig bei dieser Ausführungsform ist, dass das Schwellerprofilteil lediglich zur Aufnahme von Aufprallkräften bzw. Aufprallenergien ausgebildet ist. Dies bedingt sich aus der Tatsache, dass das Strangpressprofilteil in Querrichtung zum Fahrzeug eine Breite besitzt, welche ein Mehrfaches seiner Höhe beträgt. Damit ist der Beitrag des Schwellerverstärkungselements zur Gesamtkarosseriesteifigkeit als gering einzustufen, denn dies würde eine hohe Biegesteifigkeit auch in einer Ebene senkrecht zur Breite des Schwellerverstärkungselements erfordern.

In der EP 0 861 767 B1 ist ein Schwellerverstärkungselement enthalten, welches ein langes, einstückiges Profilteil aus Leichtmetall aufweist. Das Schwellerverstärkungselement wird dabei lediglich an Knotenelementen mit zugeordneten Karosserieteilen verbunden.

Eine solche punktuelle Anbindung führt zu einer ungleichmäßigen Einleitung der Aufprallenergie in die Fahrzeugkarosserie und bedingt daher Belastungsspitzen, welche zu einem Versagen der Karosserie führen können und somit eine Gefahr für die Insassen darstellen.

Somit liegt der vorliegenden Erfindung die Aufgabe zugrunde, ein Schwellerverstärkungselement für eine Fahrzeugkarosserie zu schaffen, welches die oben genannten Nachteile beseitigt und insbesondere gegenüber vorbekannten Anordnungen eine wirksamere Aufnahme von Aufprallenergien bzw. -kräften sowie eine höhere Karosseriesteifigkeit bei geringerem Gewicht und guter Montier- und Herstellbarkeit des Schwellerverstärkerelements gewährleistet.

### VORTEILE DER ERFINDUNG

Diese Aufgabe wird erfindungsgemäß durch das Schwellerverstärkungselement mit den Merkmalen des Patentanspruchs 1 gelöst.

Die der vorliegenden Erfindung zugrunde liegende Idee besteht darin, dass ein Schwellerverstärkungselement für eine Fahrzeugkarosserie, mit einem sich entlang einer Längsachse erstreckenden Hohlprofilabschnitt; einem sich entlang der Längsachse erstreckenden, an dem Hohlprofilabschnitt angeformten, unteren Flanschabschnitt zur Anbindung eines Karosserieseitenteilabschnitts und eines unteren Längsträgerabschnitts; und einem sich entlang der Längsachse erstreckenden, an dem Hohlprofilabschnitt angeformten, oberen Flanschabschnitt zur Anbindung eines Türeinstiegabschnitts und eines oberen Längsträgerabschnitts, vorgesehen ist.

Die vorliegenden Erfindung weist gegenüber den oben genannten Ansätzen den Vorteil auf, dass das Schwellerverstärkungselement in einer Kollision die Aufprallenergie gleichmäßig über die Flanschabschnitte in das Fahrzeug einleitet und damit Belastungsspitzen, die zu einem Versagen der Karosserie führen können, verhindert. Ferner ergibt sich aus der Anbindung des Karosserieseitenteilabschnitts und des Längsträgerabschnitts und des Türeinstiegsabschnitts an den Flanschabschnitten des Schwellerverstärkungselements eine Verbundstruktur, welche die Torsions- und Biegesteifigkeit der Fahrzeugkarosserie sehr positiv beeinflusst.

Ein weiterer Vorteil der Erfindung liegt darin, dass die Flanschabschnitte als zentrale Anbindungselemente ausgebildet sind. Die Befestigung mehrerer Bauteile an einem Flanschabschnitt kann in einem einzigen Arbeitsschritt erfolgen und führt daher zu einer Reduzierung des Montageaufwands. Beispielsweise können mittels eines Stanzniets mehrere Bauteile gleichzeitig an einem Flanschabschnitt befestigt werden. Ferner können somit auch Verbindungselemente, wie beispielsweise Stanznieten, eingespart werden und ergeben somit ein Schwellerverstärkungselement geringeren Gewichts. Erfindungsgemäß ist das Schwellerverstärkungselement einteilig ausgeführt. Es besitzt daher eine höhere Festigkeit bei geringerem Gewicht gegenüber einem mehrteiligen Aufbau, da auf Verbindungselemente zum Verbinden der Teile, wie beispielsweise Schweißnähte oder Schrauben, verzichtet werden kann. Weiterhin ist erfindungsgemäß vorgesehen, dass der Hohlprofilabschnitt wenigstens eine Kammer aufweist, die einen trapezförmigen Querschnitt besitzt. Zwei zueinander etwa parallele Seitenwände der Kammer weisen unterschiedliche Längen auf. Eine dritte Seitenwand ist zu den parallelen Seitenwänden etwa senkrecht angeordnet und eine vierte Seitenwand ist im eingebauten Zustand schräg auf einen Boden der Fahrzeugkarosserie hin ausgerichtet. Daraus ergibt sich eine nasenartige Ausbildung der Kammer, was sich wiederum vorteilhaft auf das Deformationsverhalten des Schwellerverstärkungselements auswirkt.

In den Unteransprüchen finden sich vorteilhafte Ausgestaltungen und Verbesserungen des im Patentanspruch 1 angegebenen Schwellerverstärkerelements.

Gemäß einer bevorzugten Weiterbildung der Erfindung weist der obere Flanschabschnitt mindestens eine Aussparung zur Aufnahme eines Abschnitts einer A-Säule der Fahrzeugkarosserie auf. Daraus ergibt sich der Vorteil, dass die A-Säule in ihrer bereits existierenden Position großflächig mit dem Schwellerverstärkungselement verbunden werden kann und damit eine Versteifung der Karosserie erzielt werden kann.

Gemäß einer weiteren bevorzugten Ausführungsform ist das Schwellerverstärkungselement stufenförmig ausgebildet, wobei es sich zur Fahrzeugmitte hin verbreitert. Eine solche Ausbildung des Schwellerverstärkungselementes verbessert dessen Deformationsverhalten bei einer Kollision des Fahrzeuges.

Bei einer bevorzugten Weiterbildung ist das Schwellerverstärkungselement als Strangpressprofil aus einer Aluminiumlegierung ausgebildet, woraus sich ein geringer Herstellungsaufwand und ein geringeres Gewicht des Schwellenverstärkungselements ergibt.

Bei einer weiteren vorteilhaften Ausführungsform der Erfindung erstreckt sich der untere Flanschabschnitt über die gesamte Länge des Hohlprofilabschnitts. Daraus ergibt sich eine großflächige Anbindung des Schwellerverstärkungselementes und damit eine verbesserte Krafteinleitung in die Karosserie.

### ZEICHNUNGEN

Die Erfindung wird im Folgenden anhand von Ausführungsbeispielen unter Bezugnahme auf die beiliegenden Figuren der Zeichnung näher erläutert.

Von den Figuren zeigen:
- Figur 1: eine perspektivische Ansicht einer Anordnung eines unteren Türeinstiegsbereichs einer Fahrzeugkarosserie mit einem Schwellerverstärkungselement gemäß einem bevorzugten Ausführungsbeispiel der vorliegenden Erfindung;
- Figur 2: eine perspektivische Rückansicht der Anordnung aus Figur 1;
- Figur 3: einen Schnitt A-A der Anordnung aus Figur 1;
- Figur 4A: eine perspektivische Ansicht des Schwellverstärkungselementes aus der Anordnung in Figur 3;
- Figur 4B: eine perspektivische Ansicht eines Türeinstiegsabschnitts aus der Anordnung in Figur 3;
- Figur 4C: eine perspektivische Ansicht eines Längsträgerabschnitts aus der Anordnung in Figur 3; und
- Figur 4D: eine perspektivische Ansicht eines Karosserieseitenteilabschnitts aus der Anordnung in Figur 3.

### BESCHREIBUNG BEVORZUGTER AUSFÜHRUNGSBEISPIELE

In den Figuren der Zeichnung bezeichnen diegleichen Bezugszeichen gleiche oder funktionsgleiche Komponenten, soweit nichts Gegenteiliges angegeben ist.

Zur Orientierung in den Figuren dienen Koordinatensysteme mit den Koordinaten x, y und z, wobei x die Fahrzeuglängsrichtung, y die Fahrzeugquerrichtung und z die Fahrzeughochrichtung bezeichnen.

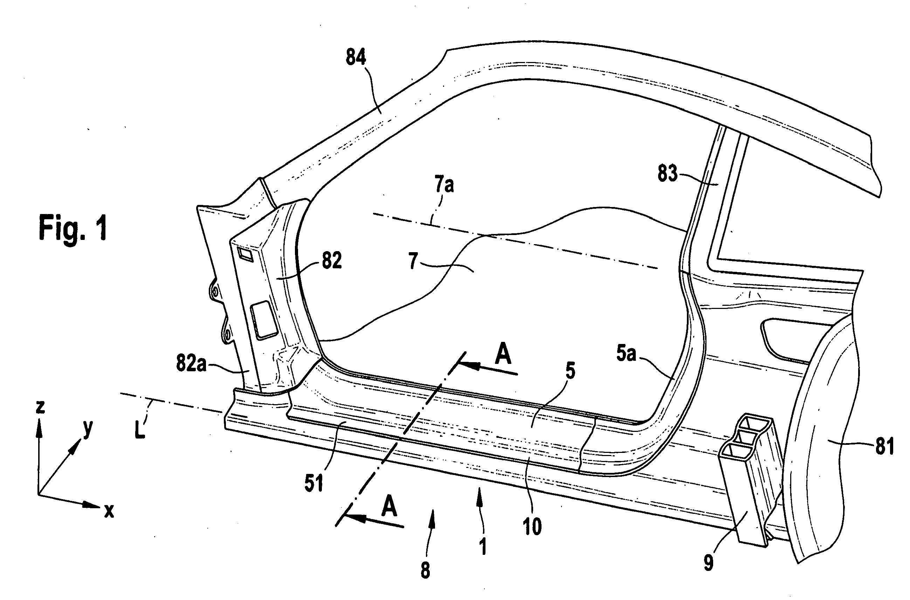

Figur 1 illustriert eine perspektivische Ansicht einer Anordnung eines unteren Türeinstiegsbereichs 8 einer Fahrzeugkarosserie, welche ein Schwellerverstärkungselement 1 gemäß einem bevorzugten Ausführungsbeispiel der vorliegenden Erfindung umfasst. Der dargestellte Türeinstiegsbereich 8 der Karosserie weist eine A-Säule 82, einen an diese sich anschließenden Dachrahmen 84, eine senkrecht nach unten von dem Dachrahmen 84 abstehende B-Säule 83 sowie einen heckseitig angeordneten, vorderen Bereich eines Radkastens 81 auf.

Das Schwellerverstärkungselement 1 weist einen sich entlang einer Längsachse (L) längs zum Fahrzeug erstreckenden Hohlprofilabschnitt 10 auf und ist in seinem vorderen Bereich 82a in Richtung der Fahrzeugforderseite gesehen an der A-Säule 82 durch Stanznieten befestigt. Ferner ist das Schwellerverstärkungselement 1 an seinem hinteren Ende in Richtung Fahrzeugrückseite gesehen an einen Bereich des Radkastens 81 befestigt.

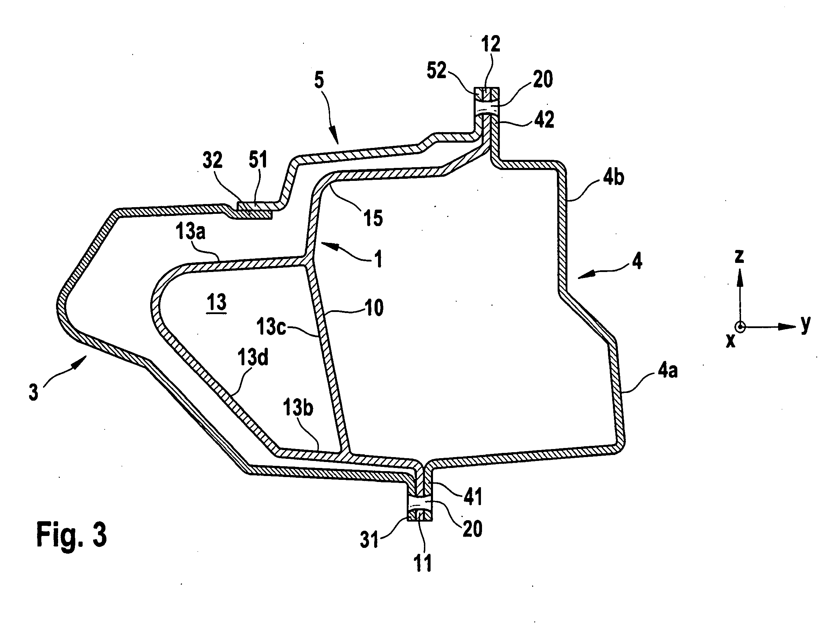

Des Weiteren sind Türeinstiegsabschnitte 5, 5a vorgesehen, welche an der A-Säule 82, an dem Schwellerverstärkungselement 1 sowie an der B-Säule 83 angebracht sind. Ein Karosserieseitenteilabschnitt 3, welcher in Figur 3 dargestellt ist, ist mit einem äußeren Flansch 51 der Türeinstiegsabschnitte 5, 5a verbunden, zieht sich außenseitig um das Schwellerverstärkungselement 1 herum und ist fahrzeugunterseitig an dem Schwellerverstärkungselement 1 befestigt. Die die Türeinstiegsabschnitte 5, 5a bilden zusammen mit dem Karosserieseitenteilabschnitt 3 einen Teil der Außenhaut der Karosserie.

Darüber hinaus ist ein Deformationselement 9 dargestellt, welches an dem Schwellerverstärkungselement 1 angebracht ist. Das Deformationselement 9 nimmt Aufprallkräfte und -energien bei einem Seitenaufprall auf.

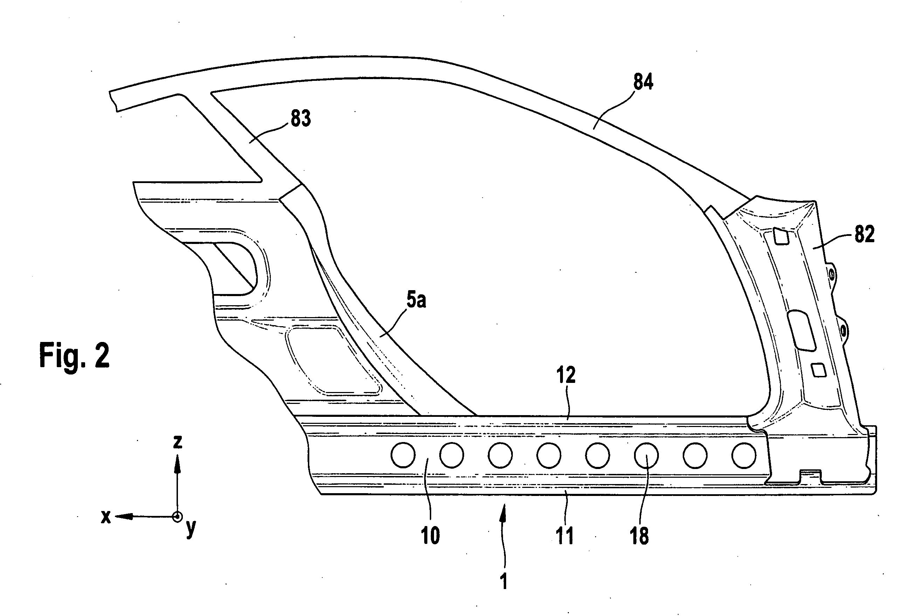

Figur 2 zeigt eine perspektivische Rückansicht der Anordnung aus Figur 1. Im Unterschied zu Figur 1 zeigt Figur 2 Ausnehmungen 18 in dem Schwellerverstärkungselement 1, welche beispielsweise als runde Löcher ausgebildet sind. Die Ausnehmungen dienen einer Gewichtsreduzierung bei nahezu effektiv gleichbleibendender Festigkeit und Steifigkeit des Schwellerverstärkungselements 1. Alternativ können die Ausnehmungen 18 auch eine andere Gestalt haben, beispielsweise oval und/oder rechteckig.

Ein Längsträger 4, welcher in Figur 3 dargestellt ist und einen, bezogen auf die z-Richtung, oberen Abschnitt 4b und einen unteren Abschnitt 4a aufweist, erstreckt sich von einem oberen Flanschabschnitt 12 des Schwellerverstärkungselementes 1 zu einem unteren Flanschabschnitt 11 des Schwellerverstärkungselementes 1.

Figur 3 illustriert einen Schnitt A-A der Anordnung aus Figur 1 und zeigt zusätzlich den Karosserieseitenteilabschnitt 3 und den Längsträgerabschnitt 4. Der Hohlprofilabschnitt 10 weist längsseitig eine Kammer 13 auf, wobei die Kammer 13 einen trapezförmigen Querschnitt besitzt. Die, bezogen auf die z-Richtung, obere Seitenwand 13a ist zu einer unteren Seitenwand 13b in etwa parallel. Die Seitenwand 13c steht senkrecht zu den parallelen Seitenwänden 13a, 13b. Die vierte Seitenwand 13d ist schräg auf eine x-y-Ebene der Fahrzeugkarosserie hin ausgerichtet. Daraus ergibt sich eine nasenartige Ausbildung der Kammer 13, was sich wiederum vorteilhaft auf das Deformationsverhalten des Schwellerverstärkungselements 1 auswirkt.

Weiterhin ist an dem Hohlprofilabschnitt der, bezogen auf die z-Richtung, untere und obere Flanschabschnitt 11, 12 angeformt. Die Flanschabschnitte 11, 12 sind vorzugsweise auf einer der Fahrzeugmitte 7a zugewandten Seite des Hohlprofilabschnitts 10 angeordnet. Der untere und der obere Flanschabschnitt 11, 12 erstrecken sich dabei in etwa senkrecht zu dem Fahrzeugboden 7 des Fahrzeuges. Ein oberer winkelförmiger Abschnitt 15 verbindet den oberen Flanschabschnitt 12 mit dem Hohlprofilabschnitt 10. Der winkelförmige Abschnitt 15 bildet dabei mit dem Hohlprofilabschnitt 10 eine Stufenform aus, an welcher das Deformationselement 9 angebracht ist.

Ein innerer Flansch 52 des Türeinstiegabschnitts 5 sowie ein oberer Flansch 42 des oberen Längsträgerabschnitts 4b sind an dem oberen Flanschabschnitt 12 des Schwellverstärkungselementes 1 gegenüberliegend befestigt. Ein unterer Flansch 31 des Karosserieseitenteilabschnitts 3 und ein unterer Flansch 41 des unteren Längsträgerabschnitts 4a sind an dem unteren Flanschabschnitt 11 des Schwellverstärkerelementes 1 ebenfalls gegenüberliegenden befestigt. Der obere Längsträgerabschnitt 4b und der untere Längsträgerabschnitt 4a bilden dabei den Längsträger 4 einteilig aus. Ferner ist der Karosserieseitenteilabschnitt 3 an einem oberen Flansch 32 mit einem äußeren Flansch 51 des Türeinstieges 5 fest verbunden, vorzugsweise mittels eines Klebstoffs und/oder Stanznieten.

Die Befestigung der Teile 31, 41, 42, 52 an dem unteren bzw. oberen Flanschabschnitt 11, 12 erfolgt vorzugsweise durch Stanznieten 20. Vorteilhaft hierbei ist, dass alle drei Bauteile mittels einer Fügeoperation verbunden werden können. Damit lässt sich der Montageaufwand erheblich reduzieren.

Ein weiterer Vorteil dieser Schalenbauweise besteht darin, dass im Falle einer leichten Kollision lediglich der Karosserieseitenteilabschnitt 3 und/oder die Türeinstiege 5, 5a, und nicht das Schwellerverstärkungselement 1, beschädigt werden. Der Karosserieseitenteilabschnitt 3 und/oder die Türeinstiege 5, 5a, lassen sich dann relativ leicht - im Vergleich zu dem Schwellerverstärkungselement 1 - austauschen.

Das Schwellerverstärkungselement 1 ist vorzugsweise als ein Strangpressprofilteil gefertigt. Dies ermöglicht eine einfache Herstellung des Schwellerverstärkungselementes 1 in einem Strangpressverfahren.

Ferner ist das Schwellerverstärkungselement 1 einteilig ausgebildet. Unter einteilig ist in der gesamten Patentanmeldung ein Schwellerverstärkungselement 1 zu verstehen, welches aus einem Stück ganzheitlich ausgebildet ist und keine Verbindungsmittel, wie beispielsweise Schweißnähte, Klebstoff, Stanznieten, Schrauben oder dergleichen aufweist. Diese einteilige Ausführungsform führt zu einer erhöhten Festigkeit bei geringerem Gewicht des Schwellverstärkungselements 1.

Ferner weist das Schwellerverstärkungselement 1 Aluminium auf. Dieses Merkmal ermöglicht eine Ausbildung des Schwellerverstärkungselementes 1 mit hoher Festigkeit bei geringem Gewicht. Zusätzlich oder alternativ kann das Schwellverstärkungselement 1 auch Kohlefaserwerkstoffe aufweisen.

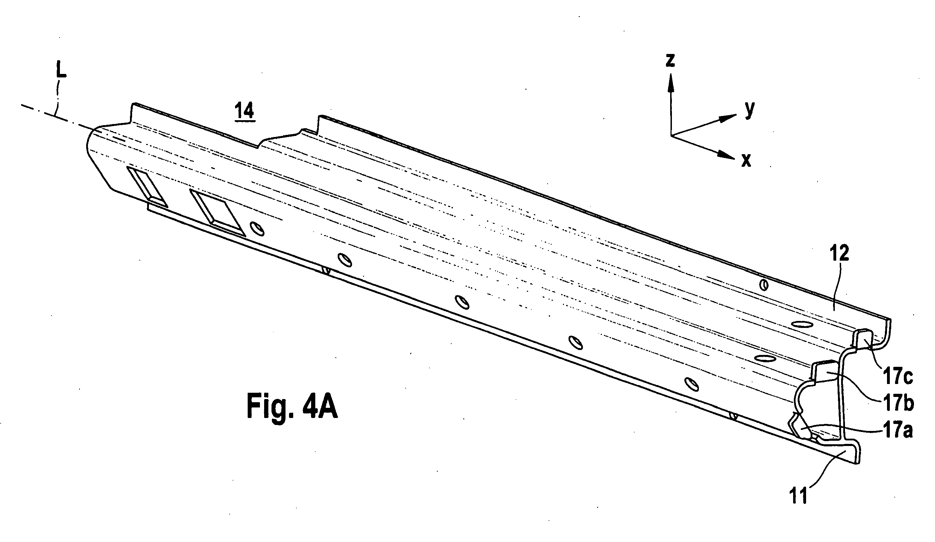

Figur 4A zeigt eine perspektivische Ansicht des Schwellerverstärkungselementes 1 aus der Anordnung in Figur 3. Der obere Flanschabschnitt 12 des Schwellerverstärkungselements 1 besitzt eine Aussparung 14 an seinem in x-Richtung gesehenen vorderen Ende. Die Aussparung 14 dient dabei zur Anbindung eines Abschnitts 82a der A-Säule 82 der Fahrzeugkarosserie. Der untere Flanschabschnitt 11 erstreckt sich über die gesamte Länge des Hohlprofilabschnitts 10.

Des Weiteren sind an dem Schwellerverstärkungselement 1 abgewinkelte Abschnitte 17a, 17b, 17c angebracht, an welchen das Schwellerverstärkungselement 1 in dem vorderen Bereich 81 des hinteren Radkastens verbunden ist. Diese Anbindung erfolgt ebenfalls vorzugsweise mittels Stanznieten. Alternativ oder zusätzlich kann dies auch durch Schweißen, Kleben und/oder Schrauben oder andere Fügeverfahren erfolgen.

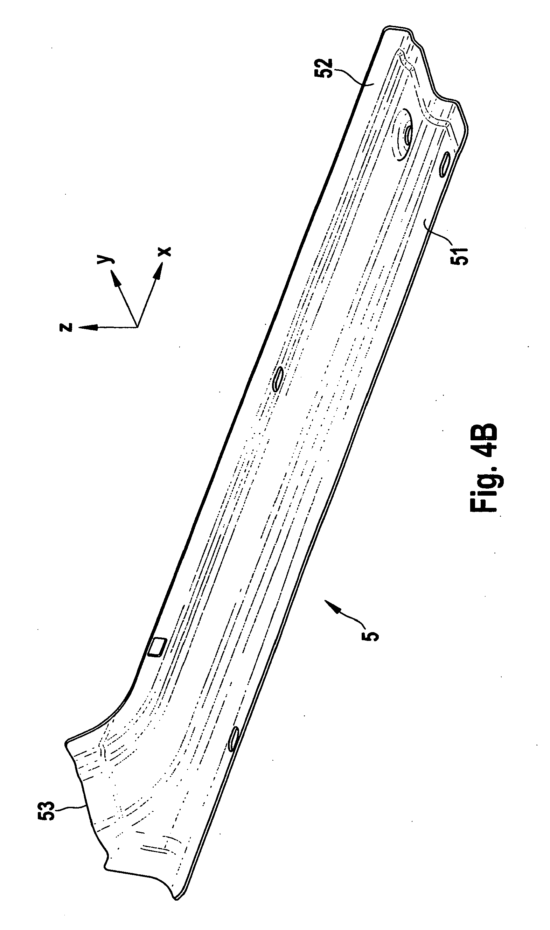

Figur 4B zeigt den Türeinstiegsabschnitt 5 aus der Anordnung in Figur 3, welcher in seinem vorderen Bereich 53 zur Anbindung an die A-Säule 82 ausgebildet ist.

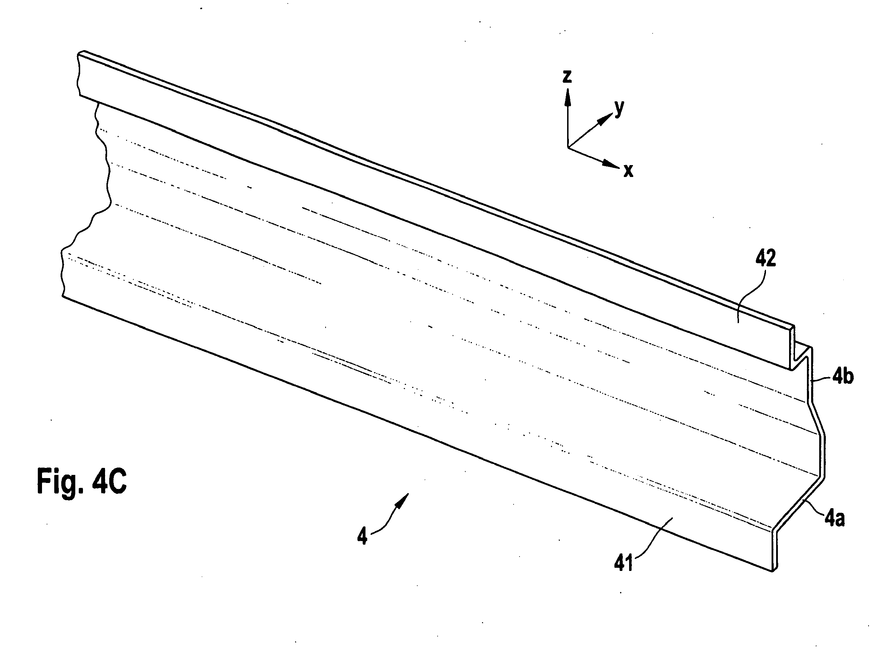

Figur 4C illustriert einen Abschnitt des Längsträgerabschnitts 4 aus der Anordnung in Figur 3, welcher den unteren Längsträgerabschnitt 4a und den oberen Längsträgerabschnitt 4b aufweist.

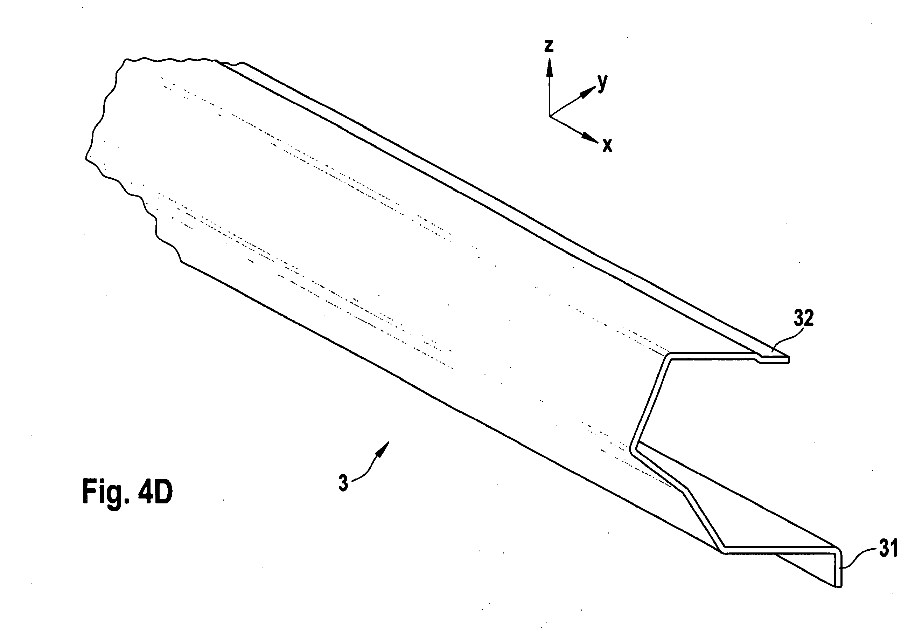

Figur 4D zeigt den Karosserieseitenteilabschnitt 3 aus der Anordnung aus Figur 3.

Bevorzugt weist die Fahrzeugkarosserie jeweils ein derartiges Schwellerverstärkungselement 1 in den jeweiligen Türeinstiegsbereichen 8 auf. Eine solche symmetrische Anordnung der Schwellerverstärkungselemente 1 erhöht die Steifigkeit der Fahrzeugkarosserie und bietet Insassen auf beiden Seiten des Fahrzeuges eine hohe Kollisionssicherheit. Durch entsprechende Querträger ist es auch möglich Kräfte bzw. Aufprallenergien von einem Schwellerverstärkungselement auf ein gegenüberliegendes Schwellerverstärkungselement zu übertragen.

Es wird demnach ein Schwellerverstärkungselement für eine Fahrzeugkarosserie geschaffen, welches eine höhere Kollisionssicherheit durch eine verbesserte Kraft- und Energieeinleitung in die Karosserie aufweist. Eine hohe Karosseriesteifigkeit bei geringerem Gewicht sowie einer guten Herstellbarkeit wird durch Ausbildung des Schwellerverstärkungselements als einteiliges Strangpressprofilteil gewährleistet. Die Flansche des Schwellerverstärkerelements als zentrale Anbindungselemente für zugeordnete Karosserieteile führen zu einer verbesserten Montierbarkeit des Schwellerverstärkungselements.

Unter in "etwa senkrecht" ist in der gesamten Patentanmeldung ein Winkel von 45 bis 90 Grad zwischen zwei Referenzflächen zu verstehen. Unter in "etwa waagrecht" bzw. "etwa parallel" ist in der gesamten Patentanmeldung ein Winkel von 0 bis 45 Grad zwischen zwei Referenzflächen zu verstehen.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Die Anbindung des Karosserieseitenteilabschnitts, des Längsträgers und der Türeinstiegsabschnitte an dem Schwellerverstärkungselement ist nicht auf die oben genannten Fügeverfahren beschränkt. Vielmehr können auch Verfahren, wie beispielsweise Laserstrahlschweißen, Elektronenstrahlschweißen, Löten, Schrauben usw. eingesetzt werden. Ferner ist auch zusätzlich oder alternativ eine Umbördelung, ein Verlappen und/oder ein Falzen (und weitere Umformverfahren) des Schwelverstärkungselements mit einem oder mehreren der dem Schwelverstärkungselement zugeordneten Teile vorteilhaft.

## Patentansprüche

1. Schwellerverstärkungselement (1) für eine Fahrzeugkarosserie, mit einem sich entlang einer Längsachse (L) erstreckenden Hohlprofilabschnitt (10);
einem sich entlang der Längsachse (L) erstreckenden, an dem Hohlprofilabschnitt (10) angeformten, unteren Flanschabschnitt (11) zur Anbindung eines Karosserieseitenteilabschnitts (3) und eines unteren Längsträgerabschnitts (4a); und einem sich entlang der Längsachse (L) erstreckenden, an dem Hohlprofilabschnitt (10) angeformten, oberen Flanschabschnitt (12) zur Anbindung eines Türeinstiegabschnitts (5) und eines oberen Längsträgerabschnitts (4b), **dadurch gekennzeichnet, dass** das Schwellerverstärkungselement (1) einteilig ausgebildet ist und dass der Hohlprofilabschnitt (10) wenigstens eine Kammer (13) aufweist, wobei die Kammer (13) einen trapezförmigen Querschnitt besitzt, wobei zwei zueinander in etwa parallele Seitenwände (13a, 13b) der Kammer (13) unterschiedliche Längen aufweisen, wobei eine dritte Seitenwand (13c) zu den zwei parallelen Seitenwänden (13a, 13b) in etwa senkrecht vorgesehen ist und wobei eine vierte Seitenwand (13d) schräg auf einen Boden der Fahrzeugkarosserie im eingebauten Zustand hin ausgerichtet ist.

2. Schwellerverstärkungselement nach Anspruch 1, **dadurch gekennzeichnet, dass** der obere Flanschabschnitt (12) wenigstens eine Aussparung (14) zur Aufnahme eines Abschnitts (82a) einer A-Säule (82) der Fahrzeugskarosserie aufweist.

3. Schwellerverstärkungselement nach wenigstens einem der vorhergehenden Ansprüche, **dadurch gekennzeichnet, dass** sich der untere Flanschabschnitt (11) über die gesamte Länge des Hohlprofilabschnitts (10) erstreckt.

4. Schwellerverstärkungselement nach wenigstens einem der vorhergehenden Ansprüche, **dadurch gekennzeichnet, dass** der untere und/oder der obere Flanschabschnitt (11; 12) auf einer der Fahrzeugkarosseriemitte zugewandten Seite (13c) des Hohlprofilabschnitts (10) angeordnet ist.

5. Schwellerverstärkungselement nach wenigstens einem der vorhergehenden Ansprüche, **dadurch gekennzeichnet, dass** sich der untere und/oder obere Flanschabschnitt (11; 12) in etwa senkrecht zu einem Boden der Fahrzeugkarosserie in einem eingebauten Zustand des Schwellerverstärkungselements (1) erstreckt.

6. Schwellerverstärkungselement nach wenigstens einem der vorhergehenden Ansprüche, **dadurch gekennzeichnet, dass** ein oberer winkelförmiger Abschnitt (15) an dem Hohlprofilabschnitt (10) vorgesehen ist, welcher den oberen Flanschabschnitt (12) mit dem Hohlprofilabschnitt (10) verbindet.

7. Schwellerverstärkungselement nach Anspruch 6, **dadurch gekennzeichnet, dass** der obere winkelförmige Abschnitt (15) mit dem Hohlprofilabschnitt (10) eine Stufenform ausbildet, an welcher ein Deformationselement (9) wenigstens teilweise anliegend anbringbar ist.

8. Schwellerverstärkungselement nach wenigstens einem der vorhergehenden Ansprüche, **dadurch gekennzeichnet, dass** die Anbindung des Karosserieseitenteilabschnitts (3) und des unteren Längsträgerabschnitts (4a) an gegenüberliegenden Seiten des unteren Flanschabschnitts (11) vorgesehen ist.

9. Schwellerverstärkungselement nach wenigstens einem der vorhergehenden Ansprüche, **dadurch gekennzeichnet, dass** die Anbindung des Türeinstiegabschnitts (5) und des oberen Längsträgerabschnitts (4b) an gegenüberliegenden Seiten des oberen Flanschabschnitts (12) vorgesehen ist.

10. Schwellerverstärkungselement nach wenigstens einem der vorhergehenden Ansprüche, **dadurch gekennzeichnet, dass** die Anbindung des Karosserieseitenteilabschnitts (3) und/oder des unteren Längsträgerabschnitts (4) und/oder des oberen Längsträgerabschnitts und/oder des Türeinstiegabschnitts (5) an dem unteren und/oder oberen Flansch (11, 12) durch Stanzniete, Klebstoff, Lötverbindungen und/oder Schweißnähte vorgesehen ist.

11. Schwellerverstärkungselement nach wenigstens einem der vorhergehenden Ansprüche, **dadurch gekennzeichnet, dass** das Schwellerverstärkungselement (1) wenigstens einen abgewinkelten Abschnitt (17a, 17b, 17c) an wenigstens einem seiner Enden aufweist, welcher einer Anbindung des Schwellerverstärkungselements (1) an zugeordneten Karosserieteilen dient.

12. Schweflerverstärkungselement nach wenigstens einem der vorhergehenden Ansprüche, **dadurch gekennzeichnet, dass** das Schwellerverstärkungselement (1) als Strangpressprofilteil hergestellt ist.

13. Schwellerverstärkungselement nach wenigstens einem der vorhergehenden Ansprüche, **dadurch gekennzeichnet, dass** das Schwellerverstärkungselement (1) Aluminium bzw. eine Aluminiumlegierung und/oder einen Faserverbundwerkstoff aufweist.

## Claims

1. Sill reinforcement element (1) for a vehicle body, having a hollow profile section (10) which extends along a longitudinal axis (L);
a lower flange section (11), which extends along the longitudinal axis (L) and is integrally formed on the hollow profile section (10), for connecting a body side part section (3) and a lower longitudinal member section (4a);
and an upper flange section (12), which extends along the longitudinal axis (L) and is integrally formed on the hollow profile section (10), for connecting a door entrance section (5) and an upper longitudinal member section (4b),
**characterized in that** the sill reinforcement element (1) is formed in one piece, and **in that** the hollow profile section (10) has at least one chamber (13), with the chamber (13) having a trapezoidal cross section, with two side walls (13a, 13b), which are approximately parallel to one another, of the chamber (13) having different lengths, with a third side wall (13c) being provided approximately perpendicular to the two parallel side walls (13a, 13b), and with a fourth side wall (13d) being aligned obliquely towards a floor of the vehicle body in the installed state.

2. Sill reinforcement element according to Claim 1, **characterized in that** the upper flange section (12) has at least one cutout (14) for receiving a section (82a) of an A pillar (82) of the vehicle body.

3. Sill reinforcement element according to at least one of the preceding claims, **characterized in that** the lower flange section (11) extends over the entire length of the hollow profile section (10).

4. Sill reinforcement element according to one of the preceding claims, **characterized in that** the lower and/or the upper flange section (11; 12) are/is arranged on a side (13c), which faces towards the middle of the vehicle body, of the hollow profile section (10).

5. Sill reinforcement element according to at least one of the preceding claims, **characterized in that** the lower and/or the upper flange section (11; 12) extend(s) approximately perpendicular to a floor of the vehicle body in an installed state of the sill reinforcement element (1).

6. Sill reinforcement element according to at least one of the preceding claims, **characterized in that** an upper angular section (15) is provided on the hollow profile section (10), which upper angular section connects the upper flange section (12) to the hollow profile section (10).

7. Sill reinforcement element according to Claim 6, **characterized in that** the upper angled section (15) forms with the hollow profile section (10) a step shape to which a deformation element (9) can be attached in an at least partially abutting manner.

8. Sill reinforcement element according to at least one of the preceding claims, **characterized in that** the body side part section (3) and the lower longitudinal member section (4a) are connected to opposite sides of the lower flange section (11).

9. Sill reinforcement element according to at least one of the preceding claims, **characterized in that** the door entrance section (5) and the upper longitudinal member section (4b) are connected to opposite sides of the upper flange section (12).

10. Sill reinforcement element according to at least one of the preceding claims, **characterized in that** the connection of the body side part section (3) and/or of the lower longitudinal member section (4) and/or of the upper longitudinal member section and/or of the door entrance section (5) to the lower and/or the upper flange (11, 12) are/is realized by means of punch rivets, adhesive, soldered connections and/or weld seams.

11. Sill reinforcement element according to at least one of the preceding claims, **characterized in that** the sill reinforcement element (1) has at least one angled section (17a, 17b, 17c) on at least one of its ends, which angled section serves for a connection of the sill reinforcement element (1) to associated body parts.

12. Sill reinforcement element according to at least one of the preceding claims, **characterized in that** the sill reinforcement element (1) is produced as an extruded profile part.

13. Sill reinforcement element according to at least one of the preceding claims, **characterized in that** the sill reinforcement element (1) has aluminium or an aluminium alloy and/or a fibre composite material.

## Revendications

1. Elément de renforcement d'un soubassement de porte (1) pour une carrosserie de véhicule, comprenant une portion de profilé creux (10) s'étendant le long d'un axe longitudinal (L) ;
une portion de bride inférieure (11) s'étendant le long de l'axe longitudinal (L), formée sur la portion de profilé creux (10), pour relier une portion d'une partie latérale de la carrosserie (3) et une portion de support longitudinal inférieure (4a) ; et une portion de bride supérieure (12) s'étendant le long de l'axe longitudinal (L), formée sur la portion de profilé creux (10), pour relier une portion de marchepied (5) et une portion de support longitudinal supérieure (4b), **caractérisé en ce que** l'élément de renforcement d'un soubassement de porte (1) est réalisé d'une seule pièce et **en ce que** la portion de profilé creux (10) présente au moins une chambre (13), la chambre (13) possédant une section transversale trapézoïdale, deux parois latérales approximativement parallèles (13a, 13b) de la chambre (13) présentant des longueurs différentes, une troisième paroi latérale (13c) étant prévue approximativement perpendiculairement aux deux parois latérales parallèles (13a, 13b), et une quatrième paroi latérale (13d) étant orientée dans l'état monté obliquement vers un plancher de la carrosserie du véhicule.

2. Elément de renforcement d'un soubassement de porte selon la revendication 1, **caractérisé en ce que** la portion de bride supérieure (12) présente au moins un évidement (14) pour recevoir une portion (82a) d'un montant A (82) de la carrosserie du véhicule.

3. Elément de renforcement d'un soubassement de porte selon au moins l'une quelconque des revendications précédentes, **caractérisé en ce que** la portion de bride inférieure (11) s'étend sur toute la longueur de la portion de profilé creux (10).

4. Elément de renforcement d'un soubassement de porte selon au moins l'une quelconque des revendications précédentes, **caractérisé en ce que** la portion de bride inférieure et/ou supérieure (11 ; 12) est disposée sur un côté (13c) de la portion de profilé creux (10) tourné vers le centre de la carrosserie du véhicule.

5. Elément de renforcement d'un soubassement de porte selon au moins l'une quelconque des revendications précédentes, **caractérisé en ce que** la portion de bride inférieure et/ou supérieure (11 ; 12) s'étend approximativement perpendiculairement à un plancher de la carrosserie du véhicule dans un état monté de l'élément de renforcement d'un soubassement de porte (1).

6. Elément de renforcement d'un soubassement de porte selon au moins l'une quelconque des revendications précédentes, **caractérisé en ce qu'**une portion supérieure de forme angulaire (15) est prévue sur la portion de profilé creux (10), laquelle relie la portion de bride supérieure (12) à la portion de profilé creux (10).

7. Elément de renforcement d'un soubassement de porte selon la revendication 6, **caractérisé en ce que** la portion supérieure de forme angulaire (15) constitue avec la portion de profilé creux (10) une forme étagée, contre laquelle peut être monté, au moins en appui partiel, un élément de déformation (9).

8. Elément de renforcement d'un soubassement de porte selon au moins l'une quelconque des revendications précédentes, **caractérisé en ce que** la liaison de la portion d'une partie latérale de la carrosserie (3) et de la portion de support longitudinal inférieure (4a) est prévue sur des côtés opposés de la portion de bride inférieure (11).

9. Elément de renforcement d'un soubassement de porte selon au moins l'une quelconque des revendications précédentes, **caractérisé en ce que** la liaison de la portion de marchepied (5) et de la portion de support longitudinal supérieure (4b) est prévue sur des côtés opposés de la portion de bride supérieure (12).

10. Elément de renforcement d'un soubassement de porte selon au moins l'une quelconque des revendications précédentes, **caractérisé en ce que** la liaison de la portion d'une partie latérale de la carrosserie (3) et/ou de la portion de support longitudinal inférieure (4) et/ou de la portion de support longitudinal supérieure et/ou de la portion de marchepied (5) à la bride inférieure et/ou supérieure (11, 12) est prévue par des rivets, de l'adhésif, des connexions brasées et/ou des cordons de soudure.

11. Elément de renforcement d'un soubassement de porte selon au moins l'une quelconque des revendications précédentes, **caractérisé en ce que** l'élément de renforcement d'un soubassement de porte (1) présente au moins une portion coudée (17a, 17b, 17c) au niveau d'au moins l'une de ses extrémités, laquelle sert à une liaison de l'élément de renforcement d'un soubassement de porte (1) à des pièces associées de la carrosserie.

12. Elément de renforcement d'un soubassement de porte selon au moins l'une quelconque des revendications précédentes, **caractérisé en ce que** l'élément de renforcement d'un soubassement de porte (1) est fabriqué en tant que pièce profilée filée.

13. Elément de renforcement d'un soubassement de porte selon au moins l'une quelconque des revendications précédentes, **caractérisé en ce que** l'élément de renforcement d'un soubassement de porte (1) présente de l'aluminium ou un alliage d'aluminium et/ou un matériau composite renforcé par des fibres.
